# EUROPEAN PATENT APPLICATION

(11) **EP 3 879 545 A1**
(43) Date of publication of application: **15.09.2021**
(21) Application number: 20162596.9
(22) Date of filing: 12.03.2020
(51) Int. Cl.: H01F 27/32, H01F 5/06, H01F 27/28, H02K 3/34, H01B 7/30

(54) **INSULATED WINDING FOR AN ELECTROMAGNETIC DEVICE**

(71) Applicant: ABB Schweiz AG, 5400 Baden (CH)
(72) Inventor: MOGHADDAM, Reza Rajabi, 724 78 Västerås (SE); ISLAM, Jahirul, 724 71 Västerås (SE)
(74) Representative: Kransell & Wennborg KB

(57) **Abstract**

A winding (1) for an electromagnetic device comprises a plurality of stacked conductors forming a row-like pattern, wherein adjacent conductors are adapted to be put on non-identical electric potentials. The stacked conductors comprise coated conductors (21, 23, 25), which each have an insulating coating, and at least some uncoated conductors (22, 24), which are devoid of insulating coating. The coated conductors may be completely or partially coated. In some embodiments, the row-like pattern may be extended into a two-dimensional matrix-like pattern, in which a partial coating covers those faces of a conductor which abut against uncoated faces of adjacent conductors. The winding maybe used in an inductor, a semiconductor component, a passive or active component, an inductive device, a rotatable inductive machine.

## Description

### TECHNICAL FIELD

The present disclosure relates to the field of electromagnetic devices and in particular to a winding for use in such devices.

### BACKGROUND

A desirable aim in the design of inductive windings (or coils, or inductors) is to apply insulation selectively, so as to limit the mass, volume and/or cost of the component. As one example, adjacent strands of a simple helical winding will be at different potentials during operation due to the ohmic drop and must therefore be separated by suitable insulation to avoid short-circuiting in normal use.

To illustrate the prior attempts to economize insulation, reference is made to US20080007133, which discloses a winding with at least one conductor stack. The winding may comprise three conductor stacks in each slot of a stator in an electric motor. To reduce eddy current losses, the conductor stacks may be provided with outer and inner insulating members. The outer insulating member is disposed on an outer circumferential surface of each conductor stack for electrically insulating the conductor stack from another conductor stack. The inner insulating member is disposed between the conductor constructional elements which are adjacent to each other in the same conductor stack. The inner insulating member may be an adhesive, such as epoxy or cyanoacrylate. Alternatively, the inner insulating member may be a non-adhesive material which is retained by stacking and by the action of the outer insulating member.

There is a need to further pursue the aim of optimizing insulation material usage.

### SUMMARY

One objective is to make available a winding which can be manufactured with a limited insulation material expenditure. The winding to be disclosed shall preferably represent an improvement over hitherto known windings. This and further objectives are achieved by the invention according to claim 1. The dependent claims define advantageous embodiments of the invention.

A winding for an electromagnetic device comprises a plurality of stacked conductors forming a row-like pattern, wherein adjacent conductors are adapted to be put on non-identical electric potentials. The ability to be put on non-identical electric potentials may include that the conductors can be put on equal or non-equal potentials, independently of each other, during operation. The row-like pattern can be discerned in a axial section through the winding, that is, a section containing the axis of the winding and such that the conductors extend into or out of the section. There, in a simple case, adjacent conductors in the row-like pattern may correspond to consecutive turns of the winding; more sophisticated winding configurations are possible as well. According to a first aspect of the invention, the stacked conductors comprise coated and uncoated conductors. The coated conductors each have a layer of insulating coating on at least a portion of their exterior. The uncoated conductors are devoid of insulating coating, and preferably devoid of any insulation at all, with the possible exception of connecting means at their ends. It is noted that such a winding may for example comprise a coated conductor which is electrically connected, at one end, to an end of an uncoated conductor, which is possibly connected, in turn, to a further coated or uncoated conductor; such a sequence of connected conductors is still to be understood as plural "conductors" in the sense of the claims.

In a winding with the characteristics of the first aspect, the conductors can be arranged in a mutually insulated relationship, so that the winding can be operated in similar manner as a conventional winding. In particular, the winding according to the first aspect will not be at a heightened risk of short-circuiting. Therefore, the use of the insulating coating material is reduced without any detriment to the practical usefulness of the winding.

In one embodiment, the uncoated conductors are non-adjacent in the row-like pattern. This ensures that two uncoated conductors do not touch each other. It is possible within this embodiment to arrange two or more coated conductors next to each other. Another option is to let coated and uncoated conductors alternate in the row-like pattern.

In one embodiment, the stacked conductors further form a two-dimensional matrix-like pattern. Again, the matrix-like pattern is to be discerned in an imaginary axial section view of the winding. The (one-dimensional) row-like pattern discussed above may be a subset of the two-dimensional matrix-like pattern. An advantage with the present embodiment is the ability to accommodate a larger number of conductors in a given axial length of the winding, that is, by providing, on top of each other, multiple rows of conductors. It is understood that the conductors in a matrix-like pattern need not be positioned in a rectangular lattice, but the consecutive rows may be shifted by a fraction of the conductor spacing, so as to form an oblique lattice (axial angle ≠ 90 degrees), which may lead to a better fill factor.

In one embodiment, each conductor has one of the following cross-sectional shapes: square, rectangular, trapezoidal, hexagonal or any shape that allows two-dimensional stacking. In a variation of this embodiment, the winding further comprises conductors with a second cross-sectional shape, which is stackable together with the first cross-section shape; examples include octagonal combined with square; and pentagonal combined with hexagonal. As used herein, stackable shapes refer to shapes susceptible of a high fill factor, i.e., a stacking that leaves no or limited gaps between the stacked shapes in the plane.

In embodiments with row-like or matrix-like patterns of conductors, it is preferable to design the winding with approximately half of the conductors uncoated and half of the conductors coated. This approximate half-half relationship may be characteristic of a near-optimal use of the insulating coating, especially for a row-like stacking pattern.

In one embodiment, at least some of the coated conductors are provided with a partial coating. This is to say, the coating does not cover the exterior of these conductors completely. It may be advantageous to use a partial coating configuration which does not vary with respect to the longitudinal direction of the conductor; instead, all cross-sections of the conductor with the partial coating are identical or near-identical. The conductor with the partial coating therefore may be said to have a cylindrical geometry. This is suitable from the point of view of row-like or matrix-like stacking. More precisely, the partial coating may be located on those faces of the conductor which, when the conductor is included in the row-like or matrix-like pattern in the winding, abuts against uncoated faces of the adjacent conductors. As used herein, "faces" refers to the different angular segments of the circumference of the cross section of a conductor; in the special case of a conductor with polygonal cross section, the "faces" may correspond to the sides of the polygon. If the partial coating is located only on the abutting faces, the unnecessary use of insulating coating material is reduced.

Each "conductor" in the sense of the claims may correspond to one strand, which is understood as the smallest winding unit in the sense that there is no subdivision into further conductors below the level of one strand. However, a plurality of strands may conversely be positioned (e.g., wound) as a bundle during a process of manufacturing the winding. In one embodiment, more precisely, a plurality of strands in the winding is surrounded by a common insulation layer. Said plurality of strands may be referred to as a turn of the winding.

In such an arrangement, the coated ones of the conductors (i.e., strands) that make up the turn have an insulating coating adapted to act as current insulation, whose main purpose it is to reduce eddy current losses, whereas the common insulation layer is a voltage insulation. In other words, the common insulation layer is adapted to withstand a higher voltage than the insulation layer of the coated conductors. This may ensure that, while the insulating coating material is used economically, the winding remains safe to use in its intended environment (e.g., in view of exposure to liquids, conducting objects, a hand of an operator) and short-circuiting between adjacent conductors is prevented.

In such an arrangement, alternatively or additionally, groups of turns of the winding may be contained in slots. The slots may be formed by mechanical separators, preferably made of or coated with an insulating material, or recesses in a body of a device. The partitioning of the turns - and thus of the conductors - into groups within respective slots reduces the need to provide insulation between conductors belonging to different slots.

In one embodiment, each "slot" in the sense just defined comprises a plurality of coated and uncoated conductors that are not surrounded by a common insulation layer. This function is fulfilled by the slots, which constitute mutually insulated compartments. This contributes to economizing the insulating coating material.

In one embodiment, the stacked conductors are made of two or more materials with different electric properties. The electric properties may include resistivity (or more generally impedance) in different frequency intervals; for example, one material may conduct particularly well at relatively lower frequencies, and the other material may conduct particularly well at relatively higher frequencies. For example, the conductors may be of two different metals, two different metal alloys, one alloy and one metal, two metals with different quality or purity ratings, etc. The choice of metal may follow the coatedness of the conductors or may be independent thereof.

In one embodiment, at least some of the stacked conductors are made of aluminum or aluminum alloy. Aluminum may be a cost-efficient choice of conductor material. Alternatively or additionally, at least some of the stacked conductors are made of a composite material comprising aluminum and copper. In particular, said at least some conductors may comprise an aluminum wire with a copper coating and, optionally, an additional insulating layer outside thereof. As a further option, at least some of the conductors may be made of alternating copper and aluminum layers (or laminae).

In one embodiment, the insulating coating is a varnish. A varnish may be easy to apply, also on a non-flat surface, then to assume a hard, durable appearance after drying and/or curing. In one embodiment, the insulating coating is an oxidation layer integral with the conductor material.

In one embodiment, a mixture of coating materials is used. In particular, the winding may comprise at least one conductor having at least one face coated with a first insulating coating material and at least one further face coated with a second, different insulating coating material. For example, one insulating coating material may be used for faces of the conductor which abut against adjacent conductors and another insulating coating material may be used for faces which constitute external surfaces of the winding, e.g., faces in contact with air.

A winding according to any of the embodiments outlined above may be arranged as a stator winding or a rotor winding in an inductive device.

In a second aspect of the invention, there is provided an electromagnetic device comprising the winding according to any of the embodiments. The electromagnetic device may be any of: an inductor, a semiconductor component, a passive or active component, an inductive device, an inductive machine where a rotor is rotatable relative to a stator.

Generally, all terms used in the claims are to be interpreted according to their ordinary meaning in the technical field, unless explicitly defined otherwise herein. In this disclosure, the term "windings" includes coils and inductors. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Embodiments of the invention will be described by way of example with reference to the accompanying drawings, on which:
figure 1 is a side view of a circular winding, whose axis is orthogonal to the plane of the drawing;
figure 2 is an axial section through II-II in figure 1, with the axis of the winding shown at the center of the figure, wherein coated and uncoated stacked conductors on each side of the axis form row-like patterns;
figure 3 is a section through a coated conductor;
figure 4 is an axial section through a winding showing a row-like pattern of coated and uncoated stacked conductors;
figure 5 is a section through a matrix-like pattern of uncoated and completely coated stacked conductors with a rectangular cross-sectional shape;
figure 6 is a section through a matrix-like pattern of uncoated and partially coated stacked conductors with a rectangular cross-sectional shape;
figure 7 is a section through a matrix-like pattern, similar to an oblique lattice, of uncoated and partially coated stacked conductors with a non-equilateral hexagonal shape;
figure 8 shows two groups of five strands each, wherein each group is surrounded by a respective common insulation layer; and
figures 9 and 10 are sections through conductors having a composite structure of materials comprising copper and aluminum, respectively.

### DETAILED DESCRIPTION

The aspects of the present invention may embodied in many different forms, and the embodiments described should not be construed as limiting; rather, these embodiments are provided by way of example so that this disclosure will be thorough and complete, and to fully convey the scope of all aspects of invention to those skilled in the art. Like numbers refer to like elements throughout the description.

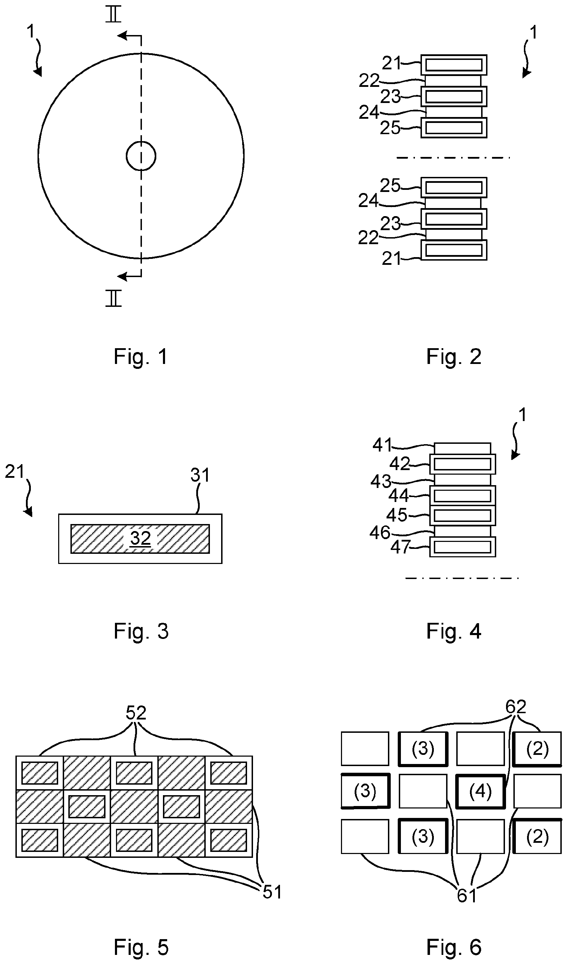

Figures 1 and 2 are different view of a circular winding 1, in which the turns (here: strands) are substantially helical with respect to an axis. Figure 1 is a side view of the winding 1, in which the axis extends into the drawing. The turns are helical in the sense that they form a spiral which is symmetric about the axis. Alternatively, the winding 1 may be non-circular, such as stadium-shaped (i.e., rectangular with two appended semi-circles), elliptic or oval. There may be further symmetries in planes orthogonal to the axis (i.e., planes substantially containing one turn of the winding 1), such as major and minor axes of an ellipse. A stadium-shaped winding may be suitable for use in a motor.

Figure 2 is an axial section through the winding 1, i.e., in the plane of the axis of the winding 1, which is drawn dash-dotted. On each side of the axis, there are coated conductors 21, 23, 25 and uncoated conductors 22, 24, which have been stacked to form a row-like pattern. The coated conductors 21, 23, 25 and uncoated conductors 22, 24 alternate, so that adjacent conductors are maintained electrically insulated. Approximately half of the conductors are coated conductors.

In this embodiment like the subsequent ones, the conductive material of all conductors 21, 22, 23, 24, 25 in the winding 1 may be of the same material, such as copper, aluminum, alloys of these and other materials. Alternatively, different conductors 21, 22, 23, 24, 25 may comprise different conductive materials. For example, the winding 1 may comprise conductors chosen from two different conductive materials. The multi-material winding 1 may for instance have one of the configurations disclosed in JP2010183788A, according to which aluminum wire is used for a part of a stator winding of an electric motor, and the rest is made of copper wire.

Figure 3 is a section through one of the coated conductors 21 which shows its inner structure. Here, a substantially rectangular conducting core 32 is surrounded by an insulating coating 31. The insulating coating 31 may be a varnish. The insulating coating 31 may further comprise an epoxy or cyanoacrylate composition. The coating 31 may be a non-adhesive or adhesive material; where an adhesive material is utilized, the exterior of the coating may have been allowed to dry and/or cure before being positioned in the winding 1. As noted above, different faces of a conductor 21 may be coated with different insulating coating materials.

According to one embodiment of the invention, the coated conductors 21, 23, 25 may be made in a material that is easy to oxidize, such as aluminum, whereas the uncoated conductors 22, 24 may be made in a different material, such as copper. The insulating coating 31 may thereby comprise a layer of aluminum oxide or some other oxidation layer integral with the material of the conducting core 32.

Figure 4 illustrates an alternative row-like pattern of the stacked conductors 21, 22, 23, 24, 25 of the winding 1. Here, there is no strict alternation of coated and uncoated conductors. For example, two coated conductors 44, 45 are adjacent. A further difference relative to the row-like pattern in figure 2 is that the outermost conductor 41 is uncoated; this is a design choice dependent on the circumstances and intended use of the winding 1.

Figure 5 illustrates a matrix-like pattern of stacked uncoated conductors 51 and completely coated conductors 52 with a rectangular cross-sectional shape. The matrix-like pattern is included in a winding. It is emphasized that the dimensions may be varied. For example, the uncoated conductors 51 may be somewhat smaller than the coated conductors 52, so as to reduce the sensitivity to short-circuiting at a corner where two uncoated conductors 51 are close. The use of a somewhat deformable or expandable insulating coating material may provide a further safety margin against the risk of mispositioning the conductors during manufacture and the like.

Figure 6 is a section through a further matrix-like pattern of uncoated 61 and coated 62 stacked conductors with a rectangular cross-sectional shape. Only for visibility, the conductors 61, 62 are shown with a mutual spacing, which is normally not present in a winding. It is understood that the matrix-like pattern is surrounded by air or by insulating material, such as the walls of a winding slot, so that no insulation is needed at the outer perimeter. As illustrated in figure 6, it is therefore possible to provide some of the coated conductors 62 with a merely partial coating. Coated faces of a conductor are drawn with a boldface line. On each coated conductor 62, the degree of coating is further indicated by the bracketed number, which corresponds to the number of coated faces of that conductor. Four, the maximum number of coated faces of a rectangular-shaped conductor, corresponds to complete coating. Here, only those faces of the conductor which abut against uncoated faces of adjacent conductors are coated. In an alternative matrix-like stacking pattern, a greater share of the faces may be coated; this may improve the electric robustness of the winding but will lead to a higher expenditure of insulating coating material.

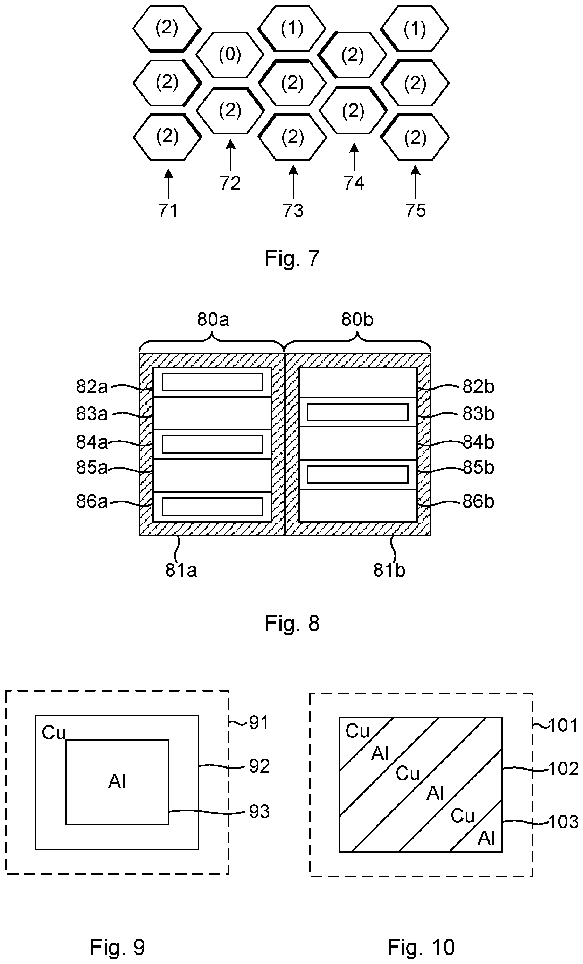

Figure 7 is a section through yet another matrix-like pattern, similar to an oblique lattice, of uncoated and partially coated stacked conductors with a non-equilateral hexagonal shape. The matrix-like pattern comprises five juxtaposed columns 71, 72, 73, 74, 75 with two or three conductors each. The sole uncoated conductor, in the second column 72, is indicated by "(0)". The coated conductors are indicated by "(1)" or "(2)" depending on their number of coated faces. All such faces of the conductors which abut against uncoated faces of adjacent conductors are coated. In this arrangement of 13 conductors, only 22 coated faces are needed; this reduces the usage of insulating coating material by 72% compared to the option of coating all 13 × 6 = 78 faces.

In addition to the examples illustrated in the figures, the cross sections of the conductors may be square, trapezoidal or an arbitrary stackable two-dimensional polygon.

Figure 8 is a section through two adjacent turns 80a, 80b of a winding. The first turn 80a is composed of five strands surrounded by a common insulation layer 81a. The five strands inside the first turn 80a constitute an alternating sequence of coated conductors 82a, 84a, 86a and uncoated conductors 83a, 85a. Similarly, the second turn 80b comprises five strands, constituting an alternating sequence of uncoated conductors 82b, 84b, 86b and coated conductors 83b, 85b, which are collectively surrounded by a common insulation layer 81b. As mentioned above, the coating layer of a conductor may have a lower voltage rating than the common insulating coatings 81.

The winding where the turns 80a, 80b are included may for example have an electric topology such that a winding current flows serially through the sequential conductors 82a, 83a, 84a, 85a, 86a of the first turn 80a and then continues through the sequential conductors 82b, 83b, 84b, 85b, 86b of the second turn 80b.

Alternatively, five parallel sub-currents of a total winding current may flow through the conductors 82a, 83a, 84a, 85a, 86a of the first turn 80a and then continue to the second turn 80b. The use of multi-strand turns 80a, 80b of this type may help mitigate the skin effect if alternating current is used. For example, it may render the impedance more uniform with respect to frequency.

Figures 9 and 10 are sections through conductors having a composite structure of materials comprising copper-based (indicated by "Cu") and aluminum-based ("Al") materials, respectively. The materials may be alloys or non-alloyed materials, with specified purities.

The conductor in figure 9 has an aluminum-based conductive core 93 and an external, preferably surrounding copper-based layer 92. The conductor may further comprise a partial or complete layer of insulating coating 91. Another conductor, shown in figure 10, has a laminated structure, in which layers of copper-based 102 and aluminum-based 103 materials alternate. An advantage of the illustrated embodiment is that the copper-based material, which is generally speaking more costly, is used only at the perimeter of the conductive portion of the conductor, which is where alternating current is known to concentrate due to the skin effect.

In figure 10, the layers have an approximate 45-degree inclination with respect to the faces of the conductor; alternatively the layers may have a different inclination or may be parallel to one of the faces. Furthermore, the thickness and number of layers may be varied without departing from the invention. In any of these configurations, it is optional to provide an insulating coating 101 on the exterior, which surrounds the composite conductive core of the conductor partially or completely.

It is furthermore possible to use conductors made of a composite material in which the two or more components are distributed in an arbitrary manner, e.g., where a granular filler material is dispersed in a matrix material, rather than being ordered into parallel or concentric layers. Conductors according to the present invention may have one of the configurations discussed above, any of those disclosed in CN200972800Y or variations thereof. Specifics regarding the structure and manufacturing of such conductors may be derived from this document.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A winding (1) for an electromagnetic device, the winding comprising a plurality of stacked conductors (21, 22, 23, 24, 25) forming a row-like pattern, wherein adjacent conductors are adapted to be put on non-identical electric potentials,
**characterized in that** the stacked conductors comprise coated conductors (21, 23, 25), which each have an insulating coating (31), and at least some uncoated conductors (22, 24), which are devoid of insulating coating.

2. The winding of claim 1, wherein the uncoated conductors are non-adjacent in the row-like pattern.

3. The winding of claim 2, wherein coated and uncoated conductors alternate in the row-like pattern.

4. The winding of any of the preceding claims, wherein the stacked conductors further form a two-dimensional matrix-like pattern.

5. The winding of any of the preceding claims, wherein at least some of the coated conductors are provided with a partial coating.

6. The winding of claim 5, wherein the partial coating of each conductor covers at least those faces of the conductor which abut against uncoated faces of adjacent conductors.

7. The winding of any of the preceding claims, wherein each conductor is a strand, and a plurality of strands is surrounded by a common insulation layer (81), thereby forming a turn (80) of the winding.

8. The winding of claim 7, wherein the insulating coating of each of the coated conductors is adapted to act as current insulation and the common insulation layer is adapted to act as voltage insulation.

9. The winding of any of the preceding claims, wherein the stacked conductors are made of at least two materials with different electric properties.

10. The winding of claim 9, wherein at least some of the stacked conductors are made of aluminum or aluminum alloy.

11. The winding of claim 9 or 10, wherein at least some of the stacked conductors are made of a composite material comprising aluminum and copper.

12. The winding of claim 11, wherein at least some of the stacked conductors are made of a copper-coated aluminum wire.

13. The winding of claim 11, wherein at least some of the stacked conductors are made of alternating copper and aluminum layers.

14. The winding of any of the preceding claims, comprising at least one conductor having at least one face coated with a first insulating coating material and at least one further face coated with a second, different insulating coating material.

15. An inductive device comprising the winding of any of the preceding claims.
